**Europäisches Patentamt**

**European Patent Office**

**Office européen des brevets**

(19)

(11) **EP 1 454 667 A1**

(12) # EUROPEAN PATENT APPLICATION

(43) Date of publication:
**08.09.2004 Bulletin 2004/37**

(51) Int Cl.7: **B01D 19/04**, D21C 3/28

(21) Application number: **03251258.4**

(22) Date of filing: **03.03.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(71) Applicant: **Laporte Performance Chemicals UK Limited**<br>**Southampton, SO45 3ZG (GB)** | (72) Inventor: **The designation of the inventor has not yet been filed**<br><br>(74) Representative: **Scott, Susan Margaret et al**<br>**Abel & Imray,**<br>**20 Red Lion Street**<br>**London WC1R 4PQ (GB)** |

(54) **Foam control agent**

(57)     Compounds having the general formula (III)

$$R^{13}[(OR^{14})_j(OR^{15})_k(OR^{16})_l \, OR^{17}]_m \qquad (III)$$

wherein $R^{13}$ is the residue of an organic initiator;
$R^{14}$ is one or more $C_2$-$C_4$ alkylene groups;
$R^{15}$ is one or more $C_2$-$C_4$ alkylene groups;
$R^{16}$ is one or more $C_2$-$C_4$ alkylene groups; provided that $R^{14}$, $R^{15}$ and $R^{16}$ must be different from each other;
$R^{17}$ is a $C_1$-$C_{10}$ alkyl group;
j is an integer of 5 to 80;
k is an integer of 0 to 80;
l is an integer of 1 to 80; and
m is an integer of 1 to 6;
may be used as foam control agents, especially in the paper/pulp industries or in industrial detergents.

**Description**

The present invention relates to a polyalkylene glycol for use as a foam control agent, and more particularly, for use as a foam control agent in aqueous systems of the pulp and paper industry.

Co- and homopolymers of alkylene oxide are widely used as non-ionic surfactants, foam control agents, mineral wetting agents, emulsifiers, de-emulsifiers, dispersants and synthetic lubricants. In particular, polyoxyalkylene copolymers made from ethylene oxide, propylene oxide and 1,2-butylene oxide represent a major class of such materials.

An example of such compounds are those of the Formula (I)

$$R^9[(OR^{10})_f(OR^{11})_g(OR^{12})_h \; OH]_i \qquad\qquad (I)$$

wherein $R^9$ is a $C_1$ to $C_{20}$ alkyl or $C_1$ to $C_{20}$ acyl group, or an aliphatic hydrocarbon having 1-6 valencies.
$R^{10}$ is an alkylene group having 2 to 4 carbon atoms;
$R^{11}$ is an alkylene group having 2 to 4 carbon atoms;
$R^{12}$ is an alkylene group having 2 to 4 carbon atoms;
f, g and h are integers of 0 to 80, and
i is an integer of 1 to 6.

However, under severe conditions e.g. of temperature or pH, such compounds may lose effectiveness due the instability of the terminating hydroxyl group.

Polylalkylene glycol derivatives are also known to be useful for lubricating applications. For example, our own WO 01/57164 describes a lubricating oil comprising a polyalkylene glycol derivative represented by the general formula (II):

$$R^4X(R^5O)_c(R^6O)_d(R^7O)_eR^8 \qquad\qquad (II)$$

wherein X = O or S,
$R^4$ is a $C_3$ to $C_{15}$ substituent comprising a heterocyclic ring, in which the heteroatom in the ring is oxygen or sulphur,
$R^5$ is a $C_2$ alkylene group,
$R^6$ is a $C_3$ alkylene group,
$R^7$ is a $C_4$ alkylene group
$R^8$ is the same as R, or is H, a $C_1$-$C_{20}$ alkyl or a $C_1$-$C_{20}$ acyl,
c, d and e are each independently 0 or an integer of 100 or less, and c + d + e = 4 to 100.

JP 09-117608 discloses a very broad class of defoaming agents which have only a slight susceptibility to combustion or ignition. The agents are polymers of one or more monomers and, if they are copolymers, they can be random or block copolymers. They may be terminated by a hydrogen atom or an organic group with not more than 24 carbon atoms, and they may contain ester, ether or urethane linkages.

We have found that by using block copolymers of a particular structure and replacing the hydroxyl termination with a more stable capping group, the polymer's stability may be considerably enhanced, thus allowing efficient performance of such polyalkylene glycols in foam control applications where conditions of temperature and pH have previously proven prohibitive. Examples of this include detergent formulations, bottle washing, and pulp and paper mill defoamers. Use in the pulping industry is of especial interest.

Accordingly a first aspect of the present invention comprises the use of a compound having the general formula (III)

$$R^{13}[(OR^{14})_j(OR^{15})_k(OR^{16})_jOR^{17}]_m \qquad\qquad (III)$$

wherein $R^{13}$ is the residue of an organic initiator;
$R^{14}$ is one or more $C_2$-$C_4$ alkylene groups;
$R^{15}$ is one or more $C_2$-$C_4$ alkylene groups;
$R^{16}$ is one or more $C_2$-$C_4$ alkylene groups; provided that $R^{14}$, $R^{15}$ and $R^{16}$ must be different from each other;
$R^{17}$ is a $C_1$-$C_{10}$ alkyl group;

j is an integer of 5 to 80;
k is an integer of 0 to 80;
l is an integer of 1 to 80; and
m is an integer of 1 to 6;
as a foam control agent.

Preferably $R^{17}$ is a methyl group.

A further aspect of the invention provides a method of controlling foam in an aqueous environment, comprising incorporating into said environment a compound having the formula (III). In yet a further aspect of the invention, there is provided a composition which comprises, as a foam control agent, a compound of the general formula III. Preferably such composition is a detergent composition. Such compositions may for example contain, in addition to the compound of the general formula III, a surfactant of either ionic or non-ionic character.

Surprisingly, it has been found that the specific block structure of the compounds of the general formula III coupled with the presence of the end-cap group leads to particularly valuable defoaming properties. The above compounds may for example be us in detergent formulations, especially industrial detergents, bottle washing and pulp and paper mill defoamers. They are particularly useful for controlling foam in aqueous industrial environments, particularly such environments having conditions of high pH and/or temperature, for example temperatures in excess of 100°C and a pH up to 14, such as in paper mill or pulp mill processing. Generally, they are effective in decreasing the foam level of aqueous media and in maintaining low foam levels, particularly in extreme media such as black liquor produced in the pulp and paper industry.

Polyalkylene glycol derivatives of the formula (III) can be prepared by suitable methods known in the art, for example as described in WO 01/57164 or in Methods A, B and C ofEP 634467A.

The copolymer is prepared by first polymerising an alkylene oxide or mixture of alkylene oxides using an organic initiator corresponding to the group $R^{13}$. $R^{13}$ may for example represent (i) an alkyl group which may be unsubstituted or substituted by one or more, preferably one or two, substituents selected from optionally alkyl-substituted cycloalkyl, aryl or heteroaryl groups; (ii) an optionally alkyl-substituted cycloalkyl, aryl or heteroaryl group; or (iii) an acyl group; each having up to 20 carbon atoms. The group $R^{13}$ has 1-6 valencies.

The initiator may be mono-functional; examples include alcohols, amines, mercaptans, phenols, amino alcohols and mercapto alcohols. Hydroxyl and amino terminated initiators are preferred.

The initiator may alternatively be polyfunctional. Preferred polyfunctional initiators have from 2 to 6 reactive hydrogens in the form of hydroxyl groups. The polyfunctional initiators include compounds of the formula $R^{20}(YH)_p$ wherein $R^{20}$ is an aliphatic, aromatic or heterocyclic radical, p is at least 2, and each Y is O, S, NH or $NR^{21}$ where $R^{21}$ is hydrocarbyl. Preferred such initiators are diols, polyols, diamines, hydroxyamines and thiols, such as ethylene/propylene glycol, diethylene/dipropylene glycol, glycerine, trimethylol propane, pentaerythritol, ethylene diamine etc. Diand, especially, tri-functional initiators are preferred for some applications.

Mixtures of organic initiators may be employed.

The copolymers of the present invention consist of two or three distinct blocks. Two or more alkylene oxides may be present in the first block of the polymer. A random configuration of the first block is obtained by polymerising more than one alkylene oxide simultaneously. Thus the initiator is reacted with one of ethylene oxide, propylene oxide, or butylene oxide, or a mixture thereof.

The resulting product is then reacted with a different alkylene oxide or mixture of alkylene oxides to produce a two-block polymer. If a three-block polymer is required, the resulting product is then reacted with a different alkylene oxide or mixture of alkylene oxides to produce the three-block polymer.

The resulting product will comprise a polyalkylene block copolymer terminating in a hydroxy group. This product is subsequently reacted further such that the hydrogen atom of the hydroxy group is converted to a $C_1$-$C_{10}$ alkyl group $R^{17}$. It is preferred that the H is converted to an alkyl group by reaction with, for example, the appropriate chloride.

The polymerisation of alkylene oxides may be carried out in the presence of a catalyst. Any catalyst capable of promoting the necessary polymerisation reaction may be employed. Representative catalysts include alkali metal and alkaline earth hydroxides, and Lewis acids. Preferred catalysts are alkali hydroxides, particularly potassium hydroxide (KOH). Typical concentrations of catalysts are approximately 0.001 to 2 wt%, with approximately 0.01 to 1.0 wt% preferred. Catalyst neutralisation may be required prior to recovery. The copolymer of the present invention may be prepared at a reaction temperature of 75 to 175°C, preferably 85 to 150°C. These temperature ranges may be suitable for the formation of both or all blocks of the copolymer of the present invention. Reaction pressures range from, but are not limited to, 1 to 15 bar, preferably 6 to 10 bar. Preferably anhydrous conditions are employed. The reaction may be performed on a batch, semicontinuous, or continuous basis.

The optimal structure of the copolymer used in the present invention depends upon the intended application. In one preferred embodiment of the invention, $R^{13}$ represents a monovalent $C_8$-$C_{18}$, preferably $C_{12}$-$C_{13}$, alkyl group; j is an integer 8 to 43; k is 0; and 1 is an integer 1 to 10. Preferably $R^{14}$ is butylene oxide or, preferably, propylene oxide, or a mixture of the two, and $R^{16}$ is ethylene oxide. Suitably such a polymer has a molecular weight of 200 to 6000, preferably 400 to 4000, and most preferably 500 to 2500. The molecular weight of the first block is typically 200 to 5000, preferably 500 to 3000, most preferably 1000 to 2000; whilst the molecular weight of the second block is typically no more than 3000, preferably less than 1000 and most preferably less than 500. Such materials are especially suitable for use as a foam control agent for aqueous paper / pulp systems.

In a second preferred embodiment of the invention, $R^{13}$ represents a polyvalent alkyl group, preferably a di- or especially, tri-valent alkyl group, preferably having from 2 to 6, especially three, carbon atoms; j is an integer 11 to 45; k is 0; and 1 is an integer 35 to 52. Preferably $R^{14}$ is ethylene oxide and $R^{16}$ is butylene oxide or, preferably, propylene oxide, or a mixture of the two. Suitably such a polymer has a molecular weight of 200 to 6000, preferably 400 to 5000, and most preferably 1000 to 5000. The molecular weight of the first block is typically 200 to 5000, preferably 500 to 3000, most preferably 500 to 2000; whilst the molecular weight of the second block is typically no more than 5000, preferably less than 4000 and most preferably less than 300. Such materials are especially suitable for use in detergents, especially industrial detergents. Such materials can also find application in pulp and paper manufacture.

Thus, where the intended application is as a foam control agent for aqueous paper/pulp systems, the initiator is preferably reacted with a higher molecular weight alkylene oxide, for example propylene oxide, followed by reaction with a lower molecular weight alkylene oxide, for example ethylene oxide. Where the intended application is as a foam control agent within an industrial detergent formulation, the initiator is preferably reacted with a lower molecular weight alkylene oxide, for example ethylene oxide, followed by reaction with a higher molecular weight alkylene oxide, for example propylene oxide. By maintaining this two-block character the resultant non-ionic surfactancy of the molecule is generally maintained and optimised above that of a multiple block system.

EXAMPLES

Example 1

To a mixture of approximately 50%/wt $C_{12}$ and 50%/wt $C_{13}$ alcohol (commercially available as Neodol 23, a product of Shell Chemicals) was added potassium hydroxide as catalyst. To this mixture was added propylene oxide (20 parts molar) in a pressurised vessel inerted with nitrogen, reaction occurring at a temperature 120 to 130°C until a constant pressure was achieved. Ethylene oxide (1.7 parts molar) was then added, reaction was maintained at a temperature of 120 to 130°C until the vessel pressure remained constant, such that the final product had a block structure with a theoretical molecular weight of 1445.

To the above product was added sodium methoxide (25% solution in methanol), available from Sigma-Aldrich, in approximately 10% excess (relative to the number of moles of hydroxyl functionality). Methanol was then drawn off initially by atmospheric distillation and then finally under reduced pressure at a temperature of between 90 to 110°C. Methyl chloride was then added to the mixture at atmospheric pressure and at a temperature of between 90 to 100°C such that >95% of the total base (determined by aqueous titration) was reacted. The remaining salts of reaction were then removed via aqueous solvent extraction.

Example 2

Potassium hydroxide was added to glycerol as a catalyst. To this mixture was added ethylene oxide (26.2 parts molar) in a pressurised vessel inerted with nitrogen, reaction occurring at 120 to 130°C until a constant pressure was achieved. Propylene oxide (40 parts molar) was then added, reaction was maintained at a temperature of 120 to 130°C until the vessel pressure remained constant, such that the final product had a block structure with a theoretical molecular weight of 3563.

To the above product was added sodium methoxide (25% solution in methanol), available from Sigma-Aldrich, in approximately 10% excess (relative to the number of moles of hydroxyl functionality). Methanol was then drawn off initially by atmospheric distillation and then finally under reduced pressure at a temperature of between 90 to 110°C. Methyl chloride was then added to the mixture at atmospheric pressure and at a temperature of between 90 to 100°C such that >95% of the total base (determined by aqueous titration) was reacted. The remaining salts of reaction were then removed via aqueous solvent extraction.

Example 3

The polymers of Examples 1 and 2 were tested according to the following procedure, which is a variation of the standard test method IP146/73. For comparison, the uncapped polymer prepared as an intermediate (i.e. prior to the reaction with methyl chloride) in Example 1 was also tested.

The apparatus for performing the foaming test comprised a 1000 ml measuring cylinder immersed in a water bath at the appropriate temperature. 200ml of black liquor obtained from a Canadian mill were placed in the measuring cylinder and allowed to reach a temperature of 80°C. An air pipe having a diffuser stone at its open end was placed into the sample, and air blown through at a fixed rate for a set period of time. After a measured length of time the height of foam in the measuring cylinder was recorded. The results are shown in the following Table.

| Anti-foamer added | Foam Height at 0 minutes | Foam Height at 5 minutes |
|---|---|---|
| None (comparative) | 21 | 16.5 |
| Uncapped intermediate of Example 1 (comparative) | 21 | 11.0 |
| Compound of Example 1 | 20 | 6.5 |
| Compound of Example 2 | 14 | 3.0 |

It can be clearly seen that the compounds according to the present invention produce a significant reduction in foam height.

**Claims**

1.   The use of a compound having the general formula (III)

$$R^{13}[(OR^{14})_j(OR^{15})_k(OR^{16})_lOR^{17}]_m \qquad\qquad (III)$$

wherein $R^{13}$ is the residue of an organic initiator;
$R^{14}$ is one or more $C_2$-$C_4$ alkylene groups;
$R^{15}$ is one or more $C_2$-$C_4$ alkylene groups;
$R^{16}$ is one or more $C_2$-$C_4$ alkylene groups; provided that $R^{14}$, $R^{15}$ and $R^{16}$ must be different from each other;
$R^{17}$ is a $C_1$-$C_{10}$ alkyl group;
j is an integer of 5 to 80;
k is an integer of 0 to 80;
l is an integer of 1 to 80; and
m is an integer of 1 to 6;
as a foam control agent.

2.   Use according to claim 1, as a foam control agent in detergent formulations, bottle washing, and pulp and paper mill defoamers.

3.   A method of controlling foam in an aqueous environment, comprising incorporating into said environment a compound having the formula (III) as defined in claim 1.

4.   A method according to claim 3, in which said environment is black liquor in a pulp or paper mill.

5.   Use or method according to any one of claims 1 to 4, in which $R^{17}$ represents a methyl group.

6.   Use or method according to any one of claims 1 to 5, in which the polymer has a molecular weight of 200 to 6000.

7.   Use or method according to any one of claims 1 to 6, in which $R^{13}$ represents (i) an alkyl group which may be unsubstituted or substituted by one or more substituents selected from optionally alkyl-substituted cycloalkyl, aryl or heteroaryl groups; (ii) an optionally alkyl-substituted cycloalkyl, aryl or heteroaryl group; or (iii) an acyl group; each having up to 20 carbon atoms.

8.   Use or method according to claim 7, in which $R^{13}$ represents a monovalent $C_8$-$C_{18}$, preferably $C_{12}$-$C_{13}$, alkyl group; j is an integer 8 to 43; k is 0; and 1 is an integer 1 to 10.

9.   Use or method according to claim 8, in which $R^{14}$ is propylene oxide and $R^{16}$ is ethylene oxide.

**10.** Use or method according to claim 7, in which $R^{13}$ represents a polyvalent alkyl group, preferably a di- or especially, tri-valent alkyl group, preferably having from 2 to 6, especially three, carbon atoms; j is an integer 11 to 45; k is 0; and 1 is an integer 35 to 52.

**11.** Use or method according to claim 10, in which $R^{14}$ is ethylene oxide and $R^{16}$ is propylene oxide

**12.** A composition which comprises, as a foam control agent, a compound of the general formula III as defined in any one of claims 1 and 5 to 11, together with a surfactant.

**13.** A composition according to claim 11, which is a detergent composition.

**European Patent Office**

**EUROPEAN SEARCH REPORT**

Application Number

EP 03 25 1258

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 659 925 A (NAT ALUMINATE CORP) 31 October 1951 (1951-10-31) * the whole document * | 1,3,6-9, 12 | B01D19/04 D21C3/28 |
| X | PATENT ABSTRACTS OF JAPAN vol. 2000, no. 14, 5 March 2001 (2001-03-05) & JP 2000 313648 A (TAIHEIYO CEMENT CORP;ASAHI DENKA KOGYO KK), 14 November 2000 (2000-11-14) * abstract * | 1,3,7-9 | |
| X | PATENT ABSTRACTS OF JAPAN vol. 012, no. 110 (C-486), 8 April 1988 (1988-04-08) & JP 62 237912 A (ASAHI DENKA KOGYO KK), 17 October 1987 (1987-10-17) * abstract * | 1,3,7-9 | |
| Y | GB 994 642 A (DOW CHEMICAL CO) 10 June 1965 (1965-06-10) * the whole document * | 1-3,6-12 | |
| A | | 13 | TECHNICAL FIELDS SEARCHED (Int.Cl.7) B01D D21C |
| Y | GB 1 505 665 A (DOW CORNING) 30 March 1978 (1978-03-30) * page 1, line 6 - page 3, line 41 * | 1-3,6-9, 12 | |
| A | | 4,5 | |
| Y | US 5 725 815 A (SLADEK HANS-JUERGEN ET AL) 10 March 1998 (1998-03-10) * the whole document * | 1-3,6 | |
| D,Y | WO 01 57164 A (LAPORTE PERFORMANCE CHEMICALS ;MOXEY JOHN ROBERT (GB); LAWFORD SIM) 9 August 2001 (2001-08-09) * the whole document * | 1,6-12 | |

The present search report has been drawn up for all claims

| Place of search | Date of completion of the search | Examiner |
|---|---|---|
| MUNICH | 18 July 2003 | Nestby, K |

EPO FORM 1503 03.82 (P04C01)

## ANNEX TO THE EUROPEAN SEARCH REPORT
## ON EUROPEAN PATENT APPLICATION NO.

EP 03 25 1258

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2003

| Patent document cited in search report | | Publication date | Patent family member(s) | | Publication date |
|---|---|---|---|---|---|
| GB 659925 | A | 31-10-1951 | NONE | | |
| JP 2000313648 | A | 14-11-2000 | NONE | | |
| JP 62237912 8 | A | | NONE | | |
| GB 994642 | A | 10-06-1965 | FR | 1310836 A | 30-11-1962 |
| | | | NL | 272003 A | |
| GB 1505665 | A | 30-03-1978 | AR | 202610 A1 | 24-06-1975 |
| | | | AU | 7976475 A | 07-10-1976 |
| | | | BE | 832978 A1 | 02-03-1976 |
| | | | BR | 7504299 A | 03-08-1976 |
| | | | CA | 1040964 A1 | 24-10-1978 |
| | | | DE | 2518053 A1 | 11-03-1976 |
| | | | FR | 2283947 A1 | 02-04-1976 |
| | | | JP | 999706 C | 30-05-1980 |
| | | | JP | 51028868 A | 11-03-1976 |
| | | | JP | 54035879 B | 06-11-1979 |
| US 5725815 | A | 10-03-1998 | DE | 4308140 A1 | 22-09-1994 |
| | | | AT | 146690 T | 15-01-1997 |
| | | | DE | 59401404 D1 | 06-02-1997 |
| | | | WO | 9421348 A1 | 29-09-1994 |
| | | | EP | 0689473 A1 | 03-01-1996 |
| | | | ES | 2095757 T3 | 16-02-1997 |
| | | | JP | 8507718 T | 20-08-1996 |
| WO 0157164 | A | 09-08-2001 | AU | 2696601 A | 14-08-2001 |
| | | | BR | 0107961 A | 29-10-2002 |
| | | | EP | 1257623 A1 | 20-11-2002 |
| | | | WO | 0157164 A1 | 09-08-2001 |

EPO FORM P0459

For more details about this annex : see Official Journal of the European Patent Office, No. 12/82